(19) Europäisches Patentamt
European Patent Office
Office européen des brevets

(11) **EP 4 553 120 A1**

(12) **EUROPEAN PATENT APPLICATION**
published in accordance with Art. 153(4) EPC

(43) Date of publication:
**14.05.2025 Bulletin 2025/20**

(21) Application number: 23835251.2

(22) Date of filing: **15.06.2023**

(51) International Patent Classification (IPC):
*C09D 133/04* (2006.01)     *C09D 4/02* (2006.01)
*C09D 7/63* (2018.01)

(52) Cooperative Patent Classification (CPC):
**C09D 4/00; C09D 7/63; C09D 133/04**

(86) International application number:
**PCT/JP2023/022184**

(87) International publication number:
**WO 2024/009717 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 JP 2022109705**

(71) Applicant: **DIC Corporation
Tokyo 174-8520 (JP)**

(72) Inventors:
• **OHASHI, Kota
Takaishi-shi, Osaka 592-0001 (JP)**
• **DOHI, Kenta
Takaishi-shi, Osaka 592-0001 (JP)**

(74) Representative: **TBK
Bavariaring 4-6
80336 München (DE)**

(54) **COATING COMPOSITION AND CURED PRODUCT**

(57)     Provided is a coating composition containing an acrylic resin (1), an acrylate compound (2), and a quaternary ammonium compound (3), in which the coating composition contains, as monomer components constituting the acrylic resin (1), 5% to 50% by mass of a β-diketone group-containing monomer (A), 0.1% to 0.8% by mass of a carboxyl group-containing monomer (B), and 49.5% to 94.5% by mass of a monomer (C) that is other than the monomer (A) and the monomer (B), is free of any of functional groups of a hydroxyl group, a nitrile group, and an amide group, and has a homopolymer glass transition temperature of 60°C or higher. Since the coating composition makes it possible to obtain a cured product having excellent base material adhesion, chemical resistance, and solvent resistance without using an isocyanate-based curing agent, it can be used in fields where high durability and safety are required, such as automotive interior and exterior materials, household appliances, coating materials for building materials, and coating agents for films.

## Description

### TECHNICAL FIELD

The present invention relates to a coating composition and a cured product. In particular, the present invention relates to a coating composition that makes it possible to obtain a cured product (coating) having excellent base material adhesion, chemical resistance, and solvent resistance, which are required in various fields such as automotive interior and exterior materials, household appliances, coating materials for building materials, and coating agents for films; and a cured product obtained by using the coating composition.

### BACKGROUND ART

A coating composition used for automobiles, home appliances, building materials, and the like is required to have various types of performance such as chemical resistance, scratch resistance, and base material adhesion. As a curing method that satisfies these performance requirements, an NCO-OH curing system, in which an isocyanate group (NCO) and a hydroxyl group (OH) react with each other, is generally widely used.

In the NCO-OH curing system, an isocyanate compound is used as a curing agent for a coating material and the like, and an organic tin compound such as dibutyltin oxide and dibutyltin dilaurate is generally used as a catalyst that accelerates a curing reaction using the isocyanate compound (see PTL 1).

However, although the organic tin compound has high catalytic performance, the toxicity of the organic tin compound has become a problem in recent years, and thus, a catalyst that can replace the organic tin compound has been required.

Moreover, the NCO-OH curing system has high versatility, but has problems in storage stability or handleability, such as an influence of moisture in the air and a shortened pot life after blending an isocyanate compound as a curing agent.

In addition, for the isocyanate compound, a toxicity to the body or a shortage of supply of raw materials is also problematic, and a non-NCO-OH curing system having excellent base material adhesion, chemical resistance, and the like is required without using the isocyanate compound as a curing agent.

### CITATION LIST

### PATENT LITERATURE

PTL 1: JP2004-307800A

### SUMMARY OF INVENTION

### TECHNICAL PROBLEM

Therefore, an object to be accomplished by the present invention is to provide a coating composition that makes it possible to obtain a cured product (coating) having excellent base material adhesion, chemical resistance, and solvent resistance without using an isocyanate-based curing agent; and a cured product.

### SOLUTION TO PROBLEM

As a result of intensive studies, the present inventors have found that a cured product (coating) having excellent base material adhesion, chemical resistance, and solvent resistance can be obtained by using a coating composition containing an acrylic resin obtained by blending a specific monomer in a specific proportion, a crosslinkable acrylate compound, and a specific base catalyst, thereby completing the present invention.

That is, the present invention relates to a coating composition containing an acrylic resin (1), an acrylate compound (2), and a quaternary ammonium compound (3), in which the coating composition contains, as monomer components constituting the acrylic resin (1), 5% to 50% by mass of a β-diketone group-containing monomer (A), 0.1% to 0.8% by mass of a carboxyl group-containing monomer (B), and 49.5% to 94.5% by mass of a monomer (C) that is other than the monomer (A) and the monomer (B), is free of any of functional groups of a hydroxyl group, a nitrile group, and an amide group, and has a homopolymer glass transition temperature of 60°C or higher.

In the coating composition of the present invention, the acrylic resin (1) preferably has a weight-average molecular weight of 3,000 to 80,000.

In the coating composition of the present invention, a glass transition temperature of the acrylic resin (1) is preferably 40°C to 100°C.

The present invention relates to a cured product of the coating composition.

ADVANTAGEOUS EFFECTS OF INVENTION

By using the coating composition of the present invention, a cured product (coating) having excellent base material adhesion, chemical resistance, and solvent resistance can be obtained, and the coating composition can be used in fields where high durability and safety are required, such as automotive interior and exterior materials, household appliances, coating materials for building materials, and coating agents for films, making it useful.

DESCRIPTION OF EMBODIMENTS

[Acrylic Resin (1)]

The coating composition of the present invention is a coating composition containing an acrylic resin (1), in which the coating composition contains, as monomer components constituting the acrylic resin (1), 5% to 50% by mass of a β-diketone group-containing monomer (A), 0.1% to 0.8% by mass of a carboxyl group-containing monomer (B), and 49.5% to 94.5% by mass of a monomer (C) that is other than the monomer (A) and the monomer (B), is free of any functional groups of a hydroxyl group, a nitrile group, and an amide group, and has a homopolymer glass transition temperature of 60°C or higher.

The acrylic resin (1), by using a specific monomer in a specific proportion, makes it possible to obtain a cured product (coating) obtained by using the acrylic resin (1), which has excellent base material adhesion, water resistance, weather resistance, chemical resistance, and solvent resistance, making it useful.

[β-Diketone Group-Containing Monomer (A)]

As a monomer component constituting the acrylic resin (1), a β-diketone group-containing monomer (A) (which may hereinafter be referred to as a "monomer (A)") is contained in an amount of 5% to 50% by mass, preferably 10% to 40% by mass, and more preferably 10% to 20% by mass with respect to a total amount of the monomer components. By using the monomer (A) within the range in the acrylic resin (1), a balance between the curing shrinkage and the crosslinking density during film formation is optimized, resulting in the obtained cured product that exhibits excellent curability and has excellent adhesion of the cured product to the base material (base material adhesion), making it useful. Furthermore, the monomer (A) is different from monomers (B) to (E) which will be described later, and the like.

As the monomer (A), any of polymerizable monomers having a β-diketone group can be used without particular limitation, and examples thereof include 2-acetoacetoxyethyl (meth)acrylate, 2-acetoacetoxypropyl (meth)acrylate, and acetoacetoxybutyl (meth)acrylate. Among these, 2-acetoacetoxyethyl methacrylate (AAEM) is preferable. These may be used alone or in combination of two or more kinds thereof.

[Carboxyl Group-Containing Monomer (B)]

As a monomer component constituting the acrylic resin (1), a carboxyl group-containing monomer (B) (which may hereinafter be referred to as a "monomer (B)") is contained in an amount of 0.1% to 0.8% by mass, preferably 0.1% to 0.5% by mass, and more preferably 0.1% to 0.3% by mass with respect to the total amount of the monomer components. By using the monomer (B) within the range in the acrylic resin (1), both compatibility with a catalyst and a balance between the curability and the pot life are achieved, making it useful. Furthermore, in a case where the content of the monomer (B) is high (for example, 1.0% by mass), curing failure is likely to occur in the obtained coating composition, which is not preferable. In addition, the monomer (B) is different from the monomer (A), monomers (C) to (E) which will be described later, and the like.

As the monomer (B), any of polymerizable monomers having a carboxyl group can be used without particular limitation, and examples thereof include unsaturated monocarboxylic acids such as (meth)acrylic acid, crotonic acid, β-carboxyethyl (meth)acrylate, ω-carboxy-polycaprolactone mono(meth)acrylate, 2-(meth)acryloyloxyethyl succinate, and 2-(meth)acryloyloxyethylhexahydrophthalic acid, unsaturated dicarboxylic acids such as maleic acid, fumaric acid, and itaconic acid, and half esters of these unsaturated dicarboxylic acids. Among these, (meth)acrylic acid is more preferable from the viewpoint of copolymerizability with other monomers. These may be used alone or in combination of two or more kinds thereof.

[Monomer (C) That Is Other than Monomer (A) and Monomer (B), Is Free of Any of Functional Groups of Hydroxyl Group, Nitrile Group, and Amide Group, and Has Homopolymer Glass Transition Temperature of 60°C or Higher]

As a monomer component constituting the acrylic resin (1), a monomer (C) that is other than the monomer (A) and the monomer (B), is free of any functional groups of a hydroxyl group, a nitrile group, and an amide group, and has a homopolymer glass transition temperature of 60°C or higher (which may hereinafter be referred to as a "monomer (C)") is contained in an amount of 49.5% to 94.5% by mass, preferably 52% to 88% by mass, and more preferably 54% to 86% by mass with respect to the total amount of the monomer components. By using the monomer (C) within the range in the acrylic resin (1), the glass transition temperature of the obtained acrylic resin (1) is improved, a coating film having high durability is obtained, and the solvent resistance or the chemical resistance of a cured product obtained by using the coating composition is improved, making it useful. Furthermore, the monomer (C) is different from the monomer (A), the monomer (B), monomers (D) and (E) which will be described later, and the like.

As the monomer (C), any of polymerizable monomers that are other than the monomer (A) and the monomer (B), are free of any functional groups of a hydroxyl group, a nitrile group, and an amide group, and have a homopolymer glass transition temperature of 60°C or higher can be used without particular limitation, and examples thereof include styrene, methyl methacrylate, ethyl methacrylate, isopropyl methacrylate, t-butyl methacrylate, cyclohexyl methacrylate, 3,3,5-trimethylcyclohexyl methacrylate, isobornyl methacrylate, and isobornyl acrylate. Among these, methyl methacrylate is more preferable from the viewpoint of the polarity of the monomer. These may be used alone or in combination of two or more kinds thereof.

[Alkyl (Meth)acrylate Ester (D) Having Alkyl Group Having 2 to 10 Carbon Atoms and Homopolymer Glass Transition Temperature of Lower than 60°C]

As a monomer component constituting the acrylic resin (1), an alkyl (meth)acrylate (D) having an alkyl group having 2 to 10 carbon atoms and a homopolymer glass transition temperature of lower than 60°C (which may hereinafter be referred to as a "monomer (D)") can be contained. In particular, alkyl (meth)acrylate having an alkyl group having 2 to 4 carbon atoms and a homopolymer glass transition temperature of lower than 60°C can be contained from the viewpoint of the polarity of a polymer after polymerization and the solubility in a solvent. Furthermore, the monomer (D) is different from the monomers (A) to (C), a monomer (E) which will be described later, and the like.

Examples of the monomer (D) include ethyl acrylate, propyl (meth)acrylate, isopropyl acrylate, butyl (meth)acrylate, isobutyl (meth)acrylate, s-butyl (meth)acrylate, t-butyl acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, and isodecyl (meth)acrylate. Among these, butyl (meth)acrylate can be more preferably used from the viewpoints of the polarity of the polymer after polymerization and the solubility in a solvent. These may be used alone or in combination of two or more kinds thereof.

The monomer (D) is preferably 15% by mass or less, and more preferably 10% by mass or less with respect to the total amount of the monomer components constituting the acrylic resin (1).

[Other Monomer Components]

As the monomer components constituting the acrylic resin (1), polymerizable monomers such as a hydroxyl group-containing monomer, an amide group-containing monomer, an amino group-containing monomer, and an epoxy group-containing monomer, which are other monomer components (which may hereinafter be referred to as a "monomer (E)") can be used as necessary, in addition to the monomer (A) and the like.

The monomer (E) is in an amount of preferably 0% to 5% by mass, and more preferably 0% to 3% by mass with respect to the total amount of the monomer components constituting the acrylic resin (1).

The acrylic resin (1) can be obtained by appropriately combining and polymerizing the monomer (A) and the like according to desired characteristics. In addition, the acrylic resin (1) may include any of a random copolymer, a block copolymer, a graft copolymer, and the like.

(Polymerization Method)

As a method for polymerizing the acrylic resin (1), any appropriate method can be adopted, and examples thereof include solution polymerization, bulk polymerization, emulsion polymerization, and various radical polymerizations. Among these, the solution polymerization is preferable from the viewpoint of ease of handling.

(Radical Polymerization Initiator)

The acrylic resin (1) may include a radical polymerization initiator, for example, in a case of radical polymerization. The radical polymerization initiator can be, for example, a thermal polymerization initiator that generates free radicals during heating. These may be used alone or in combination of two or more kinds thereof.

Examples of the radical polymerization initiator include peroxide-based radical polymerization initiators and azo-based radical polymerization initiators. Among these, the peroxide-based radical polymerization initiators are preferable.

Examples of the peroxide-based radical polymerization initiators include hydroperoxide compounds such as 1,1,3,3-tetramethylbutyl hydroperoxide; dialkyl peroxide compounds such as tert-butylcumyl peroxide, di-tert-butyl peroxide, di-tert-hexyl peroxide, dicumyl peroxide, 1,4-bis(1-tert-butylperoxy-1-methylethyl)benzene, and 2,5-dimethyl-2,5-bis(tert-butylperoxy)hexane; diacyl peroxide compounds such as dilauroyl peroxide, didecanoyl peroxide, dicyclohexyl peroxydicarbonate, and bis(4-tert-butylcyclohexyl)peroxydicarbonate; and peroxyester compounds such as tert-butyl peroxyacetate, tert-butyl peroxybenzoate, tert-butyl peroxyisopropyl monocarbonate, tert-butyl peroxy-2-ethylhexanoate, tert-hexyl peroxy-2-ethylhexanoate, tert-butyl peroxyneodecanoate, tert-hexyl peroxyisopropyl monocarbonate, tert-butyl peroxylaurate, (1,1-dimethylpropyl) 2-ethylperhexanoate, tert-butyl 2-ethylperhexanoate, tert-butyl 3,5,5-trimethylperhexanoate, tert-butylperoxy-2-ethylhexyl monocarbonate, and tert-butyl peroxymaleic acid.

Examples of the azo-based radical polymerization initiator include azonitrile compounds such as 2,2'-azobis(4-methoxy-2,4-dimethylvaleronitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, and 2-phenylazo-4-methoxy-2,4-dimethyl-valeronitrile; azoamide compounds such as 2,2'-azobis[2-methyl-N-[1,1-bis(hydroxymethyl)-2-hydroxyethyl]propionamide], 2,2'-azobis[2-methyl-N-[1,1-bis(hydroxymethyl)ethyl]propionamide], 2,2'-azo-bis[2-methyl-N-[2-(1-hydroxybutyl)]-propionamide], 2,2'-azobis[2-methyl-N-(2-hydroxyethyl)-propionamide], 2,2'-azo-bis(2-methylpropionamide) dihydrate, 2,2'-azobis[N-(2-propenyl)-2-methylpropionamide], 2,2'-azobis(N-butyl-2-methylpropionamide), and 2,2'-azobis(N-cyclohexyl-2-methylpropionamide); and alkylazo compounds such as 2,2'-azo-bis(2,4,4-trimethylpentane) and 2,2'-azobis(2-methylpropane).

Examples of a commercially available products of the radical polymerization initiator include "PERBUTYL C", "PERBUTYL A", "PERBUTYL P", "PERBUTYL L", "PERBUTYL O", "PERBUTYL ND", "PERBUTYL Z", "PERBUTYL I", "PERKMIL P", "PERKMIL D", "PERHEXYL D", "PERHEXYL A", "PERHEXYL I", "PERHEXYL Z", "PERHEXYL ND", "PERHEXYL O", "PERHEXYL PV", and "PERHEXYL O", all of which are manufactured by NOF Corporation.

An amount of the polymerization initiator to be used may be an ordinary amount of use, and for example, can be selected from a range of about 0.3 to 15 parts by mass, and is preferably 0.5 to 10 parts by mass, with respect to 100 parts by mass of a total amount of the monomer components constituting the acrylic resin (1).

The polymerization temperature and the polymerization time can be appropriately selected depending on the type of a monomer to be used, the type of a polymerization initiator, and the like. For example, the polymerization temperature can be set to about 80°C to 130°C, and the polymerization time can be set to about 5 hours to 20 hours.

(Chain Transfer Agent)

In addition, for the polymerization, various known chain transfer agents (molecular weight adjusters, or adjusters for a degree of polymerization) can be used as necessary. The chain transfer agent is selected from, for example, mercaptans such as n-lauryl mercaptan, t-lauryl mercaptan, glycidyl mercaptan, and 2-mercaptoethanol, and among these, t-lauryl mercaptan is preferably used. These may be used alone or in combination of two or more kinds thereof.

An amount of the chain transfer agent to be used may be an ordinary amount of use, and can be selected from a range of about 0.1 to 10 parts by mass with respect to 100 parts by mass of the total amount of the monomer components constituting the acrylic resin (1).

The weight-average molecular weight (Mw) of the acrylic resin (1) is preferably 3,000 to 80,000, more preferably 3,500 to 70,000, and still more preferably 4,000 to 60,000. In a case where the weight-average molecular weight (Mw) is within the range, a balance between the physical properties of the coating film and the workability is good, making it useful.

A glass transition temperature (Tg) of the acrylic resin (1) is preferably 40°C to 100°C, more preferably 45°C to 95°C, and still more preferably 50°C to 90°C. In a case where the glass transition temperature (Tg) is within the range, a balance among the physical properties of the coating film is good, making it useful.

[Acrylate Compound (2)]

The coating composition of the present invention contains an acrylate compound (2) other than the raw materials used for the acrylic resin (1), in addition to the acrylic resin (1). The acrylate compound (2) is different from the acrylic resin (1) and serves as a crosslinking agent (crosslinkable monomer), which is important for obtaining a cured product using the coating composition. In addition, the acrylate compound (2) may be a compound having one or more (meth)acryloyl groups (having an unsaturated double bond) in one molecule, and from the viewpoint of improving the chemical resistance and the solvent resistance, it is preferable that the acrylate compound (2) has two or more (meth)acryloyl groups in one molecule.

Examples of the acrylate compound (2) include monoesters such as methyl acrylate, lauryl acrylate, stearyl acrylate, isostearyl acrylate, tetrahydrofurfuryl acrylate, (methoxyethyl) acrylate, methoxypolyethylene glycol acrylate, (2-methyl-2-ethyl-1,3-dioxolan-4-yl) acrylate, [{cyclohexane-spiro-2-(1,3-dioxolan-4-yl)}methyl] acrylate, and {(3-ethyloxetane-3-yl)methyl} acrylate; diesters such as ethylene glycol diacrylate, propylene glycol diacrylate, butanediol diacrylate, pentanediol diacrylate, hexanediol diacrylate, heptanediol diacrylate, octanediol diacrylate, nonanediol diacrylate, decanediol diacrylate, glycerin-1,2-diacrylate, glycerin-1,3-diacrylate, pentaerythritol diacrylate, 2-hydroxy-3-acryloyloxypropyl methacrylate, tricyclodecanedimethanol diacrylate, dipropylene glycol diacrylate, and tripropylene glycol diacrylate; and glycerin triacrylate, trimethylolpropane triacrylate, pentaerythritol triacrylate, dipentaerythritol triacrylate, ethoxylated isocyanuric acid triacrylate, ethoxylated glycerin triacrylate, ethoxylated trimethylolpropane triacrylate, pentaerythritol tetraacrylate, dipentaerythritol pentaacrylate, dipentaerythritol hexaacrylate, ditrimethylolpropane tetraacrylate, ethoxylated pentaerythritol tetraacrylate, trimethylolpropane trimethacrylate, and tripentaerythritol octaacrylate. Among these, from the viewpoint of both the base material adhesion and chemical resistance, and the solvent resistance, tricyclodecanedimethanol diacrylate, trimethylolpropane triacrylate, dipentaerythritol pentaacrylate, or dipentaerythritol hexaacrylate is more preferable. These may be used alone or in combination of two or more kinds thereof.

(Other Crosslinking Agents (Curing Agents))

The coating composition may further include another curing agent (crosslinking agent) as necessary, in addition to the acrylate compound (2). The crosslinking agent is not particularly limited, and examples thereof include an epoxy-based crosslinking agent, an oxazoline-based crosslinking agent, an aziridine-based crosslinking agent, a metal chelate-based crosslinking agent, and a carbodiimide-based crosslinking agent. The crosslinking agent can be appropriately used depending on a type of the functional group included in the coating composition to be used, and the like. Furthermore, it is preferable that the isocyanate-based crosslinking agent is not used since there are problems, for example, in that the pot life of the coating composition is shortened. These may be used alone or in combination of two or more kinds thereof.

With regard to an amount of the acrylate compound (2) to used, a molar ratio of an active proton C-H in the $\beta$-diketone group-containing monomer (A) constituting the acrylic resin (1) to an unsaturated double bond C=C in the acrylate compound (2) can be selected to be within a range of 0.5 to 2.0, and from the viewpoint of a balance between the base material adhesion and chemical resistance, and the solvent resistance, the molar ratio is preferably selected to be in a range of 0.8 to 1.2.

[Quaternary Ammonium Compound (3)]

The coating composition of the present invention contains a quaternary ammonium compound (3), in addition to the acrylic resin (1) and the acrylate compound (2). The quaternary ammonium compound (3) is a base catalyst, and from the viewpoint of accelerating a curing reaction at the same time as heating, the quaternary ammonium compound (3) serves as a thermal latent curing catalyst (curing accelerator), which is important for obtaining a cured product by using the coating composition. In addition, for the quaternary ammonium compound (3), it is preferable that three or more of the hydrocarbon groups bonded to a nitrogen atom in a quaternary ammonium group (cationic group) in the quaternary ammonium compound has 2 or more carbon atoms, and it is also preferable that the anion ionically bonded to the cationic group is a hydroxide ion (OH⁻), an acetate ion (RCOO⁻), a carbonate ion (RCO³⁻), or an alkoxide ion (RO⁻). Furthermore, it is preferable that R represents a hydrogen atom or an alkyl group.

Examples of the quaternary ammonium compound (3) include tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl t-butylammonium hydroxide, tetra-n-propyl phosphonium hydroxide, tetra-n-butyl phosphonium hydroxide, tetra-n-pentyl phosphonium hydroxide, tetra-n-hexyl phosphonium hydroxide, tetracyclohexyl phosphonium hydroxide, tetra(trifluoromethyl)phosphonium hydroxide, trimethylcyclohexyl phosphonium hydroxide, trimethyl(trifluoromethyl)phosphonium hydroxide, trimethyl t-butyl phosphonium hydroxide, tetrapropylammonium acetate, tetrabutylammonium acetate, and a triethylmethylammonium 2-ethylhexane salt. Among these, from the viewpoint of achieving both the curability and the pot life, tetrabutylammonium hydroxide, tetrabutylammonium acetate, or a triethylmethylammonium 2-ethylhexane salt is preferable. These may be used alone or in combination of two or more kinds thereof.

The coating composition may further include other curing catalysts as necessary, in addition to the quaternary ammonium compound (3). As the other curing catalysts, for example, amines such as triethylamine, N,N-benzylmethylamine, N,N-dimethylphenylamine, and N,N-dimethylaniline; imidazoles such as methylimidazole, 1,2-dimethylimidazole, and 2-methyl-4-methylimidazole; phosphines such as triphenylphosphine and tributylphosphine; or the like can be

**EP 4 553 120 A1**

used. Furthermore, from the viewpoint of a balance between the physical properties of a coating film and the pot life, it is preferable that a coating material, an ink, or the like in which an amidine such as 1,8-diazabicyclo(5.4.0)undec-7-ene (DBU) is used as a curing catalyst is not used.

An amount of the quaternary ammonium compound (3) to be used can be selected from a range of about 0.1 to 6.0 parts by mass, and is preferably 0.3 to 3.2 parts by mass, with respect to 100 parts by mass of the total amount of the monomer components constituting the acrylic resin (1) from the viewpoints of the base material adhesion and chemical resistance, and the solvent resistance.

(Other Additives)

The coating composition may contain other additives as necessary. As the other additives, additives such as a silane coupling agent, a lubricant, a filler, a thixotropy imparting agent, a viscosity imparting agent, a wax, a heat stabilizer, a light stabilizer, a fluorescent brightener, a foaming agent, a pH adjuster, a leveling agent, an anti-gelling agent, a dispersion stabilizer, an antioxidant, a radical scavenger, a heat resistance imparting agent, an inorganic filler, an organic filler, a plasticizer, a reinforcing agent, an antibacterial agent, a mildewproof agent, a rust inhibitor, a thermoplastic resin, a thermal curing resin, a pigment, a dye, a conductivity imparting agent, an antistatic agent, a moisture permeability improver, a water repellent, an oil repellent, a hollow foam body, a crystal water-containing compound, a flame retardant, a water absorbent, a moisture absorbent, a deodorant, a foam stabilizer, an antifoaming agent, a fungicide, a preservative, an algicide, a pigment dispersant, a blocking inhibitor, and a hydrolysis inhibitor. An amount of these additives to be blended is not particularly limited and can be appropriately selected.

(Solvent)

A solvent can be used in the coating composition as necessary. Examples of the solvent include acetone, diethyl ketone, methyl ethyl ketone, methyl isobutyl ketone, diethyl ether, ethylene glycol dimethyl ether, ethylene glycol diethyl ether, ethylene glycol dibutyl ether, tetrahydrofuran, dioxane, ethyl acetate, butyl acetate, isobutyl acetate, propyl acetate, n-pentane, n-hexane, cyclohexane, n-heptane, benzene, toluene, xylene, carbon tetrachloride, dichloromethane, chloroform, trichloroethane, dimethylformamide, N-methylpyrrolidone, acetonitrile, diacetone alcohol, normal butanol, and propylene glycol monomethyl ether acetate. Amounts of these solvents to be blended are not particularly limited and can be appropriately selected.

[Coating Composition]

The coating composition of the present invention relates to a coating composition containing an acrylic resin (1), an acrylate compound (2), and a quaternary ammonium compound (3), in which the coating composition contains, as monomer components constituting the acrylic resin (1), 5% to 50% by mass of a β-diketone group-containing monomer (A), 0.1% to 0.8% by mass of a carboxyl group-containing monomer (B), and 49.5% to 94.5% by mass of a monomer (C) that is other than the monomer (A) and the monomer (B), is free of any of functional groups of a hydroxyl group, a nitrile group, and an amide group, and has a homopolymer glass transition temperature of 60°C or higher.

Since the coating composition has thermal latency and undergoes a rapid reaction by heating, the composition (solution) has a long pot life, and has excellent storage stability and handleability, resulting in a cured product (coating) obtained by using the coating composition having excellent base material adhesion, chemical resistance, and solvent resistance, making it useful.

A method for preparing the coating composition is not particularly limited and the coating composition can be prepared by a known method. For example, the coating composition can be prepared by uniformly mixing each of the components such as the acrylic resin (1). More specific examples of the method include a method for preparing a coating composition (solution) by adding a solvent to the acrylic resin (1) and the acrylate compound (2) to adjust the viscosity and blending the quaternary ammonium compound (3) as a base catalyst with the solution. This method makes it possible to avoid partial insolubility or local high concentration of the base catalyst by blending the base catalyst after the viscosity preparation, making it useful. In addition, this method makes it possible to improve the pot life of the coating composition (solution), which is effective for coating properties and the like.

[Cured Product]

The present invention relates to a cured product of the coating composition. The cured product is a cured coating film (film) or the like that is obtained by a crosslinking reaction of the coating composition, and is a cured product (coating) having excellent base material adhesion, chemical resistance, and solvent resistance, making it useful.

The cured product (coating) can be formed by, for example, applying and drying the coating composition on a

7

surface of a base material or the like. Examples of a method for forming the cured product (coating) include a method in which the coating composition is uniformly applied onto the surface of the base material by a roller method, a spray method, an applicator, a bar coater, a brush, or other known methods, and then cured at room temperature or under heating. In a case where the coating composition contains an organic solvent as a solvent, it is preferable to perform heating and drying after the coating using a heating roller, hot air, a hot plate, or the like.

In addition, in a case where a coating film (film) cured by, for example, a crosslinking reaction of the coating composition is formed, the curing is preferably performed by heating at, for example, 40°C to 120°C, and more preferably 60°C to 90°C from the viewpoint of curability. In addition, the other curing can be performed by, for example, radical polymerization by heating (for example, 50°C to 120°C) or light irradiation under pressure (for example, 1 to 5 MPa). In such a case, the known crosslinking agent (thermal curing agent or photocuring agent) and the like can also be used in combination.

[Use]

Since the coating composition of the present invention makes it possible to obtain a cured product (coating) having excellent base material adhesion, chemical resistance, and solvent resistance, it can be used in fields where high durability and safety are required, such as automotive interior and exterior materials, household appliances, coating materials for building materials, and coating agents for films, each using the coating.

EXAMPLES

Hereinafter, the present invention will be described in more detail with reference to Examples, but should not be construed as being limited to the following Examples as long as the gist of the present invention is not impaired.

(Production Example 1)

390.6 parts by mass of butyl acetate was added to a flask equipped with a cooling tube, a thermometer, a dropping funnel, and a stirrer, and the internal temperature was raised to 110°C.

Next, a mixture of 392.6 parts by mass of methyl methacrylate, 60.5 parts by mass of butyl acrylate, 50.4 parts by mass of 2-acetoacetoxyethyl methacrylate, 0.5 parts by mass of methacrylic acid, 98.9 parts by mass of n-butyl acetate, and 5.0 parts by mass of PERBUTYL O (product name, manufactured by NOF Corporation, t-butyl peroxy-2-ethylhexanoate) was added dropwise thereto for 5 hours. One hour after the completion of the dropwise addition, a mixture of 3.9 parts by mass of butyl n-acetate and 0.5 parts by mass of PERBUTYL O was added to the mixture. Thereafter, the mixture was subjected to a polymerization reaction for 17 hours while maintaining the internal temperature of 110°C. Next, butyl acetate was additionally added thereto to obtain a target resin having a nonvolatile content of 50% by mass. The weight-average molecular weight (Mw) of the resin was 32,000.

(Production Examples 2 to 14)

Resins of Production Examples 2 to 14 were prepared according to the same procedure as in Production Example 1, using the blending contents in Table 1 were used.

(Examples 1 to 13 and Comparative Examples 1 to 8)

(Method for Manufacturing Coating Film: Non-NCO-OH Curing System)

The resin (β-diketone group-containing acrylic resin) obtained in each of Production Examples 1 to 14 was blended with a polyfunctional acrylate (acrylate compound), and a mixed solvent of butyl acetate/isobutyl acetate/normal butanol/propylene glycol monomethyl ether acetate (30/30/30/10 (mass ratio)) was used as a solvent to adjust the viscosity to be approximately 10 seconds with an NK-2 Iwata viscosimeter cup (manufactured by Anest Iwata Corporation).

Next, a quaternary ammonium salt (quaternary ammonium compound) which is a base catalyst was blended to prepare a coating composition (solution), and the coating composition (solution) was used for spray-coating a base material (ABS: acrylonitrile-butadiene-styrene copolymer, and PC: polycarbonate). Thereafter, the coating film was set for 10 minutes, dried at 80°C for 1 hour, and allowed to stand at room temperature (approximately 23°C) for about 7 days to form a coating film (film thickness: 20 to 30 μm (after drying)) on the base material.

(Comparative Examples 7 and 8)

(Method for Manufacturing Coating Film: NCO-OH Curing System)

The resin (hydroxyl group-containing acrylic resin) obtained in each of Production Examples 13 and 14, a polyisocyanate (SUMIDUR N-3300, manufactured by Sumika Covestro Urethane Co., Ltd.) as a curing agent, and a catalyst (dibutyltin dilaurate) were blended, and a mixed solvent of diacetone alcohol/isobutyl acetate/ethyl acetate/butyl acetate (30/30/30/10) (mass ratio) was used as a solvent to adjust the viscosity to be approximately 10 seconds with an NK-2 Iwata viscosimeter cup (manufactured by Anest Iwata Corporation), thereby obtaining a coating composition (solution).

Next, the base material (ABS and PC) was spray-coated with the coating composition (solution). Thereafter, the coating film was set for 10 minutes, dried at 80°C for 1 hour, and allowed to stand at room temperature (approximately 23°C) for about 7 days to form a coating film (film thickness: 20 to 30 $\mu$m (after drying)) on the base material.

(GPC Measurement)

The weight-average molecular weight (Mw) of the resins obtained in Production Examples above was measured under the following GPC measurement conditions.

[GPC Measurement Conditions]

Measuring device: High performance GPC device ("HLC-8220GPC" manufactured by Tosoh Corporation)
Columns: The following columns manufactured by Tosoh Corporation were used in a state of being connected in series.

"TSKgel G5000" (7.8 mm I.D. × 30 cm) × 1 column

"TSKgel G4000" (7.8 mm I.D. × 30 cm) × 1 column

"TSKgel G3000" (7.8 mm I.D. × 30 cm) × 1 column

"TSKgel G2000" (7.8 mm I.D. × 30 cm) × 1 column

Detector: RI (refractive index detector)
Column temperature: 40°C
Eluent: Tetrahydrofuran (THF)
Flow rate: 1.0 mL/min
Injection amount: 100 $\mu$L (tetrahydrofuran solution with a sample concentration of 4 mg/mL)
Standard sample: A calibration curve was created using the following monodisperse polystyrene.

[Monodisperse Polystyrene]

"TSKgel standard polystyrene A-500" manufactured by Tosoh Corporation
"TSKgel standard polystyrene A-1000" manufactured by Tosoh Corporation
"TSKgel standard polystyrene A-2500" manufactured by Tosoh Corporation
"TSKgel standard polystyrene A-5000" manufactured by Tosoh Corporation
"TSKgel standard polystyrene F-1" manufactured by Tosoh Corporation
"TSKgel standard polystyrene F-2" manufactured by Tosoh Corporation
"TSKgel standard polystyrene F-4" manufactured by Tosoh Corporation
"TSKgel standard polystyrene F-10" manufactured by Tosoh Corporation
"TSKgel standard polystyrene F-20" manufactured by Tosoh Corporation
"TSKgel standard polystyrene F-40" manufactured by Tosoh Corporation
"TSKgel standard polystyrene F-80" manufactured by Tosoh Corporation
"TSKgel standard polystyrene F-128" manufactured by Tosoh Corporation
"TSKgel standard polystyrene F-288" manufactured by Tosoh Corporation

"TSKgel standard polystyrene F-550" manufactured by Tosoh Corporation

(Glass Transition Temperature (Tg))

Since the glass transition temperature (hereinafter simply referred to as a "design Tg") calculated by the FOX equation is improved in sunscreen resistance, solvent resistance, and water resistance of the obtained coating film, the glass transition temperature (design Tg) of the resin (acrylic resin (1)) obtained in Production Examples above is preferably in a range of 40°C to 100°C.

Furthermore, in the present invention, the glass transition temperature calculated by the FOX equation is calculated according to the FOX equation: $1/Tg = W1/Tg1 + W2/Tg2 + ...$ (Tg: a glass transition temperature to be determined, W1: a weight fraction of the component 1, and Tg1: a homopolymer glass transition temperature of the component 1).

As a value of the homopolymer glass transition temperature of each component, a value described in Polymer Handbook (4th Edition) by J. Brandrup, E. H. Immergut, and E. A. Grulke (Wiley Interscience) and an actually measured value measured by differential scanning calorimetry (DSC) after synthesis of the homopolymer were used.

(Pot Life)

As described above, the obtained coating composition (solution) was stored at 23°C, and the viscosity for each elapsed time was measured with an NK-2 Iwata viscosimeter cup (manufactured by Anest Iwata Corporation).

Furthermore, in a case where the evaluation was A or B, it was determined that the coating composition was at a level which was not problematic in practical use (A was the best evaluation).

(Evaluation Standards)

A: Case where after 24 hours, the fluidity remains and the initial viscosity is less than twice the initial viscosity
B: Case where after 24 hours, the fluidity remains but the initial viscosity is twice or more and less than 4 times
C: There is no fluidity after more than 10 hours and 24 hours or less
D: There is no fluidity after more than 0 hours and 10 hours or less

(Base Material Adhesion Test)

As described above, for the coating films obtained on the base materials (ABS and PC), a cross-cut test (1 mm, 100 squares, 4 directions) was performed in accordance with JIS K 5600-5-6, and the adhesion of the coating films to the base materials (ABS and PC) was visually evaluated.

Furthermore, in a case where the evaluation was 5B, it was determined that the coating film was at a level which was not problematic in practical use (5B was the best evaluation).

(Evaluation Standards)

5B: There is no defect.
4B: The defective part accounts for 5% or less.
3B: The defective part accounts for more than 5% and 15% or less.
2B: The defective part accounts for more than 15% and 35% or less.
1B: The defective part accounts for more than 35% and 65% or less.
0B: The defective part accounts for more than 65.

(Water Resistance Test)

As described above, the coating films obtained on the base materials (ABS and PC) were immersed in water (tap water) heated to 40°C for 240 hours, a cross-cut test (1 mm, 100 squares, 4 directions) was performed in accordance with JIS K 5600-5-6, and the adhesion of the coating films to the base materials (ABS and PC) was visually evaluated.

Furthermore, in a case where the evaluation was 5B, it was determined that the coating film was at a level which was not problematic in practical use (5B was the best evaluation).

(Evaluation Standards)

5B: There is no defect.
4B: The defective part accounts for 5% or less.
3B: The defective part accounts for more than 5% and 15% or less.
2B: The defective part accounts for more than 15% and 35% or less.
1B: The defective part accounts for more than 35% and 65% or less.
0B: The defective part accounts for more than 65.

(Sunscreen Resistance Test)

An evaluation test was performed using a sunscreen (manufactured by SSL Healthcare Japan Ltd., "Coppertone Sport Ultra Sweat Proof SPF30") cream.
As described above, the coating film obtained on the base material (ABS) on which the coating film had been formed was cut to have a size of 50 mm × 70 mm, and the sunscreen cream was uniformly applied (0.5 g/100 cm$^2$) on the coating film. Thereafter, the coating film was dried at 55°C for 4 hours. After drying, the sunscreen cream was washed with a neutral detergent (manufactured by Kao Corporation, product name "Cucute") and the appearance of the coating film was evaluated by visual observation according to the following standards.
Furthermore, in a case where the evaluation was A or B, it was determined that the coating film was at a level which was not problematic in practical use (A was the best evaluation).

(Evaluation Standards)

A: There is no residual mark.
B: There are residual marks on a part of the coating film.
C: There are residual marks found on the entire coating film.
D: The sunscreen cream does not fall off.

(Ethanol Resistance Test)

A rubbing test, in which a felt (manufactured by Valqua, Ltd., width 10 mm × height 10 mm × depth 40 mm) including ethanol (first-grade reagent, 95% or more) was pressed on the coating film obtained on the base material (ABS) as described above and the felt was reciprocated up to 500 times while applying a load of 1 kg, was performed. The state of the coating film after rubbing was visually observed, and the evaluation was performed according to the following standards, depending on the number of times until the base material of ABS was visible.
Furthermore, in a case where the evaluation was A or B, it was determined that the coating film was at a level which was not problematic in practical use (A was the best evaluation).

(Evaluation Standards)

A: More than 500 times
B: More than 350 times and 500 times or less
C: More than 150 times and 350 times or less
D: 150 times or less

[Table 1]

| Production Example | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Monomer (A) | 2-Acetoacetoxyethyl methacrylate | 10.0 | 12.5 | 15.0 | 17.5 | 40.0 | 12.5 | 12.5 | 40.0 | 15.0 | 12.5 | 12.5 | 12.5 | | |
| Monomer (B) | Methacrylic acid | 0.1 | 0.1 | 0.1 | 0.1 | 0.1 | 0.1 | 0.1 | 0.1 | 0.5 | 0.1 | 1.0 | 5.0 | 0.9 | 3.0 |
| Monomer (C) | Methyl methacrylate | 77.9 | 85.5 | 84.2 | 82.3 | 59.9 | 85.5 | 85.5 | | 73.5 | 42.0 | 85.0 | 80.0 | 62.8 | 64.0 |
| | Isobornyl methacrylate | | | | | | | | 30.9 | | | | | | |
| | Cyclohexyl methacrylate | | | | | | | | 29.0 | | | | | | |
| Monomer (D) | Butyl acrylate | 12.0 | 1.9 | 0.7 | 0.1 | | 1.9 | 1.9 | | 11.0 | 45.4 | 1.5 | 2.5 | | |
| | Butyl methacrylate | | | | | | | | | | | | | 24.3 | 5.0 |
| | 2-Ethylhexyl acrylate | | | | | | | | | | | | | 2.0 | |
| Monomer (E) | 2-Hydroxyethyl methacrylate | | | | | | | | | | | | | 10.0 | 28.0 |
| Polymerization initiator (PERBUTYL O) | | 1.0 | 1.0 | 1.0 | 1.0 | 10.0 | 1.5 | 0.5 | 1.5 | 1.5 | 1.5 | 1.5 | 1.5 | 1.5 | 4.0 |
| Reaction temperature (° C) | | 110 | 110 | 110 | 110 | 120 | 110 | 110 | 110 | 110 | 110 | 110 | 110 | 110 | 120 |
| Weight-average molecular weight (Mw) | | 32,000 | 32,000 | 31,000 | 31,000 | 4,500 | 20,000 | 50,000 | 21,000 | 21,000 | 21,000 | 22,000 | 23,000 | 22,000 | 10,000 |
| Design Tg (° C) | | 60 | 85 | 85 | 85 | 60 | 85 | 85 | 60 | 60 | 0 | 85 | 85 | 70 | 85 |

EP 4 553 120 A1

12

The abbreviations in Tables 2 and 3 will be described below.

DPHA: Dipentaerythritol pentaacrylate/dipentaerythritol hexaacrylate (product name: ARONIX M-402), manufactured by Toagosei Co., Ltd.

TMPTA: Trimethylolpropane triacrylate (product name: Miramar M300), manufactured by MIWON

A-DCP: Tricyclodecane dimethanol diacrylate (product name: NK ESTER A-DCP), manufactured by Shin-Nakamura Chemical Co., Ltd.

N-3300: Nurate form of hexamethylene diisocyanate (product name: SUMIDUR N-3300), manufactured by Sumika Covestro Urethane Co., Ltd.

tBAOH: Tetrabutylammonium hydroxide, manufactured by Tokyo Chemical Industry Co., Ltd.

tBAAc: Tetrabutylammonium acetate, manufactured by Tokyo Chemical Industry Co., Ltd.

U-CAT 18X: Triethylmethylammonium 2-ethylhexane salt (product name: U-CAT 18X), manufactured by San-Apro Ltd.

DBU: 1,8-Diazabicyclo[5.4.0]undec-7-ene, manufactured by Kanto Chemical Co., Inc.

DBTDL: Dibutyltin dilaurate, manufactured by Nitto Kasei Co., Ltd.

ABS (plate): Acrylonitrile-butadiene-styrene copolymer (product name: KOBE POLY SHEET ABS-BKWB), manufactured by Showa Denko Materials Co., Ltd.

PC (plate): Polycarbonate (product name: PC1600), manufactured by Takiron Co., Ltd.

[Table 2]

| Example | | 1 | 2 | 3 | 4 | 5 | 6 | 7 | 8 | 9 | 10 | 11 | 12 | 13 |
|---|---|---|---|---|---|---|---|---|---|---|---|---|---|---|
| Production Example | 1 | 40.0 | | | | | | | | | | | | |
| | | | 40.0 | | | | | | | 40.0 | | | | |
| | 3 | | | 40.0 | | | | | | | | | | |
| | | | | | 40.0 | | | | | | | | | |
| | | | | | | | | | | | | | | |
| | 6 | | | | | | 40.0 | | | | | | | |
| | 7 | | | | | | | 40.0 | | | | | | |
| | 8 | | | | | | | | 40.0 | | | | | |
| | 9 | | | | | | | | | | | | 40.0 | 40.0 |
| Crosslinking agent | DPHA | | 1.1 | 1.4 | 1.6 | | | | | | 1.1 | 2.3 | | 1.4 |
| | TMPTA | 1.8 | | | | 7.3 | 2.3 | 2.3 | | 1.6 | | | 2.8 | |
| | A-DCP | | 1.8 | 2.1 | 2.5 | | | | 11.4 | 1.1 | 1.8 | | | 2.1 |
| Catalyst | tBAOH | | 0.1 | | 0.1 | | | | | | 0.1 | | | |
| | tBAAc | 0.1 | | | | | 0.1 | 0.1 | | 0.2 | | | | |
| | U-CAT 18X | | | 0.2 | | 0.6 | | | 0.6 | | | 0.1 | 0.4 | 0.3 |
| Base material adhesion | ABS | 5B | 5B | 5B | 5B | 5B | 5B | 5B | 5B | 5B | 5B | 5B | 5B | 5B |
| | PC | 5B | 5B | 5B | 5B | 5B | 5B | 5B | 5B | 5B | 5B | 5B | 5B | 5B |
| Water resistance | ABS | 5B | 5B | 5B | 5B | 5B | 5B | 5B | 5B | 5B | 5B | 5B | 5B | 5B |
| | PC | 5B | 5B | 5B | 5B | 5B | 5B | 5B | 5B | 5B | 5B | 5B | 5B | 5B |
| Sunscreen resistance | | B | B | A | A | A | B | A | A | B | A | A | B | A |
| Ethanol resistance | | B | A | A | A | A | B | A | A | A | A | A | A | A |
| Pot life | | A | B | A | B | A | A | A | A | A | B | A | A | A |

[Table 3]

| Comparative Example | | 1 | 2 | 3 | 4 | 5 | 6 | 7 | 8 |
|---|---|---|---|---|---|---|---|---|---|
| Production Example | | | | | | 40.0 | 40.0 | | |
| | 10 | 40.0 | | | | | | | |
| | 11 | | | | | | | | |
| | 12 | | | | | | | | |
| | 13 | | | | | | | | |
| | | | | | | | | | 40.0 |
| Crosslinking agent | | | | | 2.3 | 1.1 | 2.3 | | |
| | TMPTA | | | | | | | | |
| | A-DCP | | 1.8 | | | | | | |
| Curing agent | N-3300 | | | | | | | | 9.5 |
| Catalyst | DBTDL | | | | | | | 0.02 | 0.02 |
| | | | 0.6 | 0.4 | 0.4 | | | | |
| | DBU | | | | | 0.2 | | | |
| Base material adhesion | ABS | 5B | | | | | | | |
| | PC | 5B | 5B | 5B | 4B | 0B | | 5B | |
| Water resistance | | 5B | 5B | 5B | | 5B | | | |
| | | | | | | | | 5B | 0B |
| Sunscreen resistance | | D | | | D | B | B | C | |
| | | | D | D | D | A | A | C | A |
| Pot life | | A | A | A | A | D | D | D | D |

From the evaluation results, it was found that in all Examples, the pot life of the obtained coating composition (solution) had no problem in practical use and had excellent storage stability, and the coating (coating film) obtained by using the coating composition had excellent base material adhesion, water resistance, sunscreen resistance (chemical resistance), and ethanol resistance (solvent resistance).

On the other hand, based on the evaluation results, in Comparative Examples 1 to 4, 7, and 8, a resin in which the desired monomer component was not used at a desired blending ratio was used. Therefore, a coating composition that simultaneously satisfied all the characteristics at a level which was not problematic in practical use could not be obtained. In addition, in Comparative Examples 5 to 8, a quaternary ammonium compound was not used as the catalyst, and thus, the pot life was short and all other characteristics could not be satisfied.

**Claims**

1.  A coating composition comprising:

    an acrylic resin (1);
    an acrylate compound (2); and
    a quaternary ammonium compound (3),
    wherein the coating composition contains, as monomer components constituting the acrylic resin (1),

    5% to 50% by mass of a $\beta$-diketone group-containing monomer (A),
    0.1% to 0.8% by mass of a carboxyl group-containing monomer (B), and
    49.5% to 94.5% by mass of a monomer (C) that is other than the monomer (A) and the monomer (B), is free of any of functional groups of a hydroxyl group, a nitrile group, and an amide group, and has a homopolymer glass transition temperature of 60°C or higher.

2. The coating composition according to claim 1,
   wherein the acrylic resin (1) has a weight-average molecular weight of 3,000 to 80,000.

3. The coating composition according to claim 1,
   wherein a glass transition temperature of the acrylic resin (1) is 40°C to 100°C.

4. A cured product of the coating composition according to any one of claims 1 to 3.

## INTERNATIONAL SEARCH REPORT

International application No.

**PCT/JP2023/022184**

### A.    CLASSIFICATION OF SUBJECT MATTER

*C09D 133/04*(2006.01)i; *C09D 4/02*(2006.01)i; *C09D 7/63*(2018.01)i
FI:    C09D133/04; C09D4/02; C09D7/63

According to International Patent Classification (IPC) or to both national classification and IPC

### B.    FIELDS SEARCHED

Minimum documentation searched (classification system followed by classification symbols)

C09D

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2019-38981 A (NATOKO KK) 14 March 2019 (2019-03-14)<br>    claims 1, 8, examples | 1-4 |
| A | JP 2015-140423 A (NATOKO KK) 03 August 2015 (2015-08-03)<br>    claim 1, examples | 1-4 |
| A | US 2014/0213692 A1 (ZHANG, Tingke) 31 July 2014 (2014-07-31)<br>    examples | 1-4 |
| A | JP 2004-18859 A (DAINIPPON INK & CHEM INC) 22 January 2004 (2004-01-22)<br>    examples | 1-4 |
| A | JP 10-45993 A (NIPPON PAINT CO LTD) 17 February 1998 (1998-02-17)<br>    entire text | 1-4 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **02 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/022184**

| Patent document cited in search report | | | Publication date (day/month/year) | Patent family member(s) | | | Publication date (day/month/year) |
|---|---|---|---|---|---|---|---|
| JP | 2019-38981 | A | 14 March 2019 | (Family: none) | | | |
| JP | 2015-140423 | A | 03 August 2015 | (Family: none) | | | |
| US | 2014/0213692 | A1 | 31 July 2014 | WO | 2013/049488 | A1 | |
| | | | | EP | 2760952 | A1 | |
| | | | | CN | 103930497 | A | |
| JP | 2004-18859 | A | 22 January 2004 | US | 2006/0094804 | A1 | |
| | | | | examples | | | |
| | | | | WO | 2003/106570 | A1 | |
| | | | | EP | 1371689 | A1 | |
| | | | | CN | 1659242 | A | |
| JP | 10-45993 | A | 17 February 1998 | US | 5959028 | A | |
| | | | | entire text | | | |
| | | | | EP | 808860 | A2 | |
| | | | | KR | 10-1997-0074866 | A | |

Form PCT/ISA/210 (patent family annex) (January 2015)

**EP 4 553 120 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004307800 A